# EUROPEAN PATENT SPECIFICATION

(11) **EP 3 833 196 B1**
(45) Date of publication and mention of the grant of the patent: **01.10.2025**
(21) Application number: 19756022.0
(22) Date of filing: 07.08.2019
(51) Int. Cl.: A23L 5/10, H05B 1/00, H05B 3/00, H05B 1/02, H05B 3/60

(54) **METHOD FOR PREPARING A FOOD PRODUCT USING A PULSED ELECTRIC FIELD COOKING DEVICE**
VERFAHREN ZUR ZUBEREITUNG EINES LEBENSMITTELS UNTER VERWENDUNG EINER KOCHVORRICHTUNG MIT EINEM GEPULSTEN ELEKTRISCHEN FELD
PROCÉDÉ DE PRÉPARATION D'UN PRODUIT ALIMENTAIRE À L'AIDE D'UN DISPOSITIF DE CUISSON À CHAMP ÉLECTRIQUE PULSÉ

(30) Priority: 07.08.2018 NL 2021435
(43) Date of publication of application: 16.06.2021
(73) Proprietor: IXL Netherlands B.V., 1055 RD Amsterdam (NL)
(72) Inventor: ROELOFS, Johannes Theodorus Maria, 1055 RD AMSTERDAM (NL); COOPMANS, Josephus Antonius Reinier, 1055 RD AMSTERDAM (NL)
(74) Representative: Algemeen Octrooi- en Merkenbureau B.V.
(86) International application number: PCT/NL2019/050520
(87) International publication number: WO 2020/032796

(56) References cited:
- WO-A1-01/07583
- WO-A1-01/80668
- WO-A1-2011/139144
- WO-A1-2015/005793
- WO-A1-2016/008868
- US-A1- 2014 363 881
- IXL E-COOKER B.V.: "THE SPECIAL AND UNIQUE NUTRI-PULSE E-COOKER", 1 September 2015 (2015-09-01), pages 1 - 8, XP055222591, Retrieved from the Internet <URL:http://www.e-cooker.eu/wp-content/uploads/2015/09/e-Cooking-Folder-Science.pdf> [retrieved on 20151021]

## Description

The invention relates to a method for preparing a food product to be suitable for human consumption, comprising the steps of: placing an amount of food product, optionally in an electrically conductive surrounding medium, in a treatment chamber comprising at least two opposing electrodes such that the food product and/or the surrounding medium is in electrical contact with the electrodes, and subjecting the food product to a pulsed electric field by applying a sequence of electric pulses generated by a pulsed electric field generator to the at least two electrodes, wherein an electric pulse sequence has a predetermined pulse profile defining, among others, a pulse frequency, a pulse duration and a time between two consecutive pulses. Additionally, the offered power may be controlled.

The use of pulsed electric fields is well-known in providing antimicrobial treatment for food products. During such treatment, pulsed electric fields with high electrical field strengths are applied to the food product to be treated, thereby avoiding the heat-up of the food product as such heating could have damaging effects upon the food product's characteristics such as taste and colour. However, in order to make food products sufficiently digestible and safe for consumption, in addition to killing contaminant micro-organisms, starch may for example need to be sufficiently gelatinised and enzymes and other proteins need to be sufficiently denatured. This requires heating up the food product to a certain extent, wherein the extent to which the food product needs to be heated before one can speak about a "cooked" food strongly depends on the food product to be prepared as well as on prevailing regulatory requirements. As the mentioned antimicrobial treatments do not involve significant heating, they therefore cannot be qualified as cooking wherein a ready-to-eat food product is obtained.

Preparing or "cooking" a food product to make it suitable for direct and safe human consumption by subjecting it to a pulsed electric field is only a recent development, reflected by for example the recent patent application WO 2016/008868 wherein a method is disclosed for cooking a food product by subjecting it to a low field strength pulsed electric field. This method involves ohmic heating of the food product, wherein the temperature raise of the food product is accomplished by the application of a pulsed electric field. Favourable results can be achieved by this method in terms of the characteristics of the prepared food product including the taste, structure and nutritional value of the food. In addition, the time and energy needed to prepare the food product using a pulsed electric field can be significantly reduced. With a variation of the total treatment time and the pulse profile of the pulsed electric field, the cooking process can be tailored to a specific food product. Controlling the process is however difficult due to the fact that the exact amount and characteristics of the food product, even between food products of the same type, differ on a case-to-case basis. Therefore, each food product will react differently to the exposure to a pulsed electric field, thereby altering both the course and the final result of the cooking process. The use of pulsed electric fields is also disclosed in IxI E-Cooker B.V.: "THE SPECIAL AND UNIQUE NUTRI-PULSE E-COOKER", 1 September 2015, XP055222591 and WO 2011/139144 A1.

The present invention has for its object to provide a way to control the cooking process such that the results of the cooking process in terms of characteristics of the prepared food product are predictable and consistent.

The invention thereto proposes a method for preparing a food product to be suitable for human consumption according to the introduction, wherein during the subjection of the food product to the pulsed electric field the following process parameters are monitored and controlled: the electric potential difference between the opposing electrodes; the current through the food product and/or the surrounding medium; the temperature of the food product and/or the surrounding medium; and optionally, the temperature difference between the food product and the surrounding medium; wherein the pulse frequency, the pulse duration and the time between two consecutive pulses and/or the offered power are changed based on these process parameters. The food product may be any liquid or solid food product, including any composed food product consisting of both liquid and solid components, that needs to be heated in order for it to be consumable. The term "suitable for human consumption" must herein be understood as being ready to eat in terms of palatability, digestibility and safety. In case the food product is a solid food product, the food product is preferably placed in a surrounding medium between the electrodes. The surrounding medium hereby ensures the electrical contact between the food product and the electrodes, for which the surrounding medium has an electric conductivity within a required range which is typically between 0,01 and 10 S/m.

Said surrounding medium is commonly a liquid suitable for cooking the food product in, such as water, a salt solution, a broth or stock, a soup or a sauce.

The monitoring of the process parameters entails the ongoing measurement of said parameters during the cooking process, which measurement may either be performed continuously or at specific intervals or moments in time throughout the cooking process. The temperature of the food product is commonly measured by placing a thermometer in the centre of the food product such that the core temperature of the food product can be measured reliably and precisely. In case the food product is placed in a surrounding medium, the temperature of the surrounding medium is commonly measured separately through the use of a separate thermometer. With the mentioned process parameters monitored, the condition of the food product, and where applicable the surrounding medium, as well as the state of the system can be determined at any moment during the cooking process. The condition of the food product may amongst others be expressed in terms of its temperature and conductivity. The degree of cooking of the food product and therewith the amount of transformation of the food components can be derived from the temperature progression of the food product during the cooking process. Starch may for example need to be sufficiently gelatinised and proteins need to be sufficiently denatured for the food product to be considered digestible, both of which conversions require the food product to be kept at a certain temperature for a certain amount of time. The durations of the time periods spent by the food product at certain temperatures may hereby be determined from said measured temperature progression. By determining the conductivity of the food product, and possible the surrounding medium, during the cooking process, one can derive whether and to what extent electroporation of the cell membranes has taken place. During electroporation, the permeability of the cell membranes increase, leading to a release of ions that increases the conductivity of food product and where applicable the surrounding medium. The electroporation of the cell membranes thus has a direct effect on capability of the food product to absorb energy, therewith significantly changing the electrical characteristics and behaviour of the system. The system must be understood as the assembly comprising the electrodes, pulsed electric field generator and power supply. The state of the system is typically expressed by its electrical parameters, comprising the power draw of the pulsed electric field generator, the current through the electrodes and the potential difference over the electrodes determining the electric field strength.

By changing the pulse profile of the pulsed electric field (which is amongst others defined terms of pulse frequency, pulse duration and time between two consecutive pulses) based on the value of the process parameters, the process can be adjusted to make sure that process parameters, and therewith the state of the system and the condition of the food product stay within a predetermined range at any point in time during the preparation of the food product. Specifically, an increase in the pulse frequency and the pulse duration and a decrease in the time between two consecutive pulses increases the rate at which energy is dissipated in the food product and/or the optional surrounding medium. The opposite applies when the pulse frequency and the pulse duration are decreased and the time between two consecutive pulses is increased. The amount of energy dissipated relates directly to the change in energy density of the food product and/or the optional surrounding medium and therewith the temperature of the food product and/or the surrounding medium. The controlling of the pulse profile of the pulsed electric field is commonly performed by a controller. The controller hereto receives the process parameter data and based on a set of instructions using past and/or present process parameter data controls the pulse profile. With the changing of the pulse profile of the pulsed electric field based on the value of the monitored process parameters it is ensured that the system stays within its operational limits during the cooking process. Moreover it is ensured that the prepared food product meets the desired characteristics, independent on the exact amount and properties of the food product. With the method according to the invention the quality of the cooked product can thus be guaranteed and easily reproduced.

In a further embodiment of the method according to the invention the pulse duration and/or the pulse frequency are decreased when A) the temperature of the food product and/or the surrounding medium, and/or B) the temperature difference between the food product and the surrounding medium, and/or C) the peak current through the food product and/or the surrounding medium reaches a predetermined value, whichever occurs first. A peak current according to the present invention corresponds to the common definition of this wording, being a maximum absolute value of a current. Reference is made to this peak current here, because a pulsed electric field leads to transient phenomena, and such field does not necessarily lead to a constant current.

By decreasing the pulse duration and/or the pulse frequency the rate at which energy is dissipated in the food product and/or the optional surrounding medium is decreased. It is herewith prevented that any one of the temperature of the food product and/or the surrounding medium, the temperature difference between the food product and the surrounding medium, and the peak current through the food product and/or the surrounding medium exceeds a pre-set limit. The maximum peak current is set to allow the cooking device to work within the electrical requirements of an ordinary kitchen appliance and to avoid that the electrical components of the cooking device are loaded beyond their operational limits, thereby risking an electrical failure of said electrical components. The predetermined peak current hereto typically has a maximum value of 1000 A. The temperature of the food product and/or the surrounding medium is maximized in order to retain as much of the nutritional value of the food product as possible, which nutritional value typically reduces with an increased maximum temperature. Conversely, from a food-safety point of view, the food product should be heated to such an extent that microorganisms are sufficiently inactivated, which typically requires heating the food product and the optional surrounding medium to above 45 °C. Ideally, the food product and the optional surrounding medium should only be heated to relatively low cooking temperatures at which a structure change of the food product in terms of proteins, starch, pectins and fibres takes place but at which the vitamins and other nutrients are retained. The predetermined maximum temperature of the food product and/or the surrounding medium hereto typically lies between 45 - 100 °C, and more specifically between 50 - 95 °C. If a surrounding medium is present, the predetermined temperature difference between the food product and the surrounding medium preferably lies between 1 - 40 °C in order to avoid an uneven heating of the food product relative to the surrounding medium. With said uneven heating comes the risk of cross-contamination between the food product and the surrounding medium, as one or the other may not be heated to a high enough temperature for the microorganisms to be inactivated. The temperature of the medium may also be an indication for the temperature of the outer surface of the food product. For that reason an minimum absolute value of the medium, or a maximum difference between the medium temperature and the food product temperature may be set.

In a common instance the predetermined temperature of the food product and/or the surrounding medium, and optionally the predetermined temperature difference between the food product and the surrounding medium are set before subjecting the food product to the pulsed electric field. This allows for the control of the pulse profile within the boundaries of the predetermined maximum temperatures and maximum temperature difference from the onset of the cooking process. These predetermined values may be set by the user of a cooking device able to perform a method according to the present invention, either directly or through the selection of a cooking program wherein certain predetermined temperature values and temperature differences are implemented as boundary conditions. In the latter case, the user preferably has the choice between a number of different cooking programs that are tailored for a specific product category or type or preferred method of preparation in terms of the outcome of the cooking process.

In a further embodiment of the method according to the invention the sequence of electric pulses comprises an initialization phase, in which initialization phase a limited number of pulses, preferably less than 100 pulses, more preferably 2 - 10 pulses, is applied to the at least two opposing electrodes, and during which initialisation phase the peak current is measured, wherein the electric pulse sequence is terminated when the peak current measured during the initialization phase exceeds a predetermined maximum. Said initialization phase serves to screen the contents of the treatment chamber based on the conductivity of said contents before the onset of the cooking process. In case the treatment chamber contains a foreign object, such as a highly conductive packaging material, the initialization phase will prevent the system from an electric overload. Alternatively, the initialization phase allows the system to pick up the situation wherein the cooking process is started without any food product present in the treatment chamber. As the initialization phase involves the applying only a limited number of pulses to the electrodes from which the conductivity of the contents of the treatment chamber is derived, no electric overload will occur during the initialization phase, even if the treatment chamber should contain a highly conductive object.

The predetermined peak current during the initialization phase should preferably not exceed a maximum of 1000 A, and more preferably lies between 500 - 600 A. The maximum of 1000 A ensures that the food product inside the treatment chamber may be subjected to a sequence of pulses as part of the cooking process without exceeding a predefined maximum power draw of the electrical system of the cooking device. The predefined maximum power draw hereby typically lies within the electrical requirements of an ordinary kitchen appliance, such that safe home use of the cooking device is possible. It is however preferred that the predetermined peak current during the initialization phase lies between 500 - 600 A, as this would leave room for increasing the pulse duration and/or the pulse frequency beyond those during the initialization phase without overloading the electrical system of the cooking device.

It is preferred that during the initialization phase the pulse duration is less than 100 µs, preferably less than 50 µs. By keeping the pulse duration below these values, only a limited amount of energy is dissipated in the food product and/or the optional surrounding medium while subjecting the food product and the optional surrounding medium to the limited number of electric pulses of the initialization phase. In case that the conductivity of the contents of the treatment chamber lies outside a predefined range of acceptable values, it is herewith ensured that no damage is incurred by the cooking device and electrical system thereof. It is for similar reasons preferred that during the initialization phase the pulse frequency is less than 200 Hz, and preferably less than 100 Hz. By limiting the pulse frequency, the amount of energy per unit of time that is dissipated in the food product and/or the optional surrounding medium is limited. This ensures that the electrical load on the cooking device and electrical system thereof stays within bounds, even if the conductivity of the contents of the treatment chamber lies outside a predefined range of acceptable values.

In a further embodiment of the method according to the invention the electric pulse sequence comprises a warm-up phase wherein the pulse duration and the pulse frequency are increased. An increase in the pulse duration and/or the pulse frequency goes together with an increase in the rate at which energy is dissipated in the food product and/or the optional surrounding medium. This would thus increase the change in temperature of the food product and/or the surrounding medium, accelerating the cooking process. The warm-up phase typically comprises an electroporation phase wherein the duration of the electrical pulses applied to the at least two electrodes is increased. During the electroporation phase the permeability of the cell membranes increases, which results in a release of ions that increases the conductivity of food product, thereby further increasing the rate at which energy is dissipated in the food product and/or the optional surrounding medium. The warm-up phase may typically follow directly after the initialization phase. As an effective way of increasing the energy dissipation in the food product and/or the optional surrounding medium, during the warm-up phase the pulse duration may initially be increased at a constant pulse frequency, after which the pulse frequency may be increased while keeping the pulse duration constant at the last set value. The pulse duration during the warm-up phase may hereby typically be increased to 20 - 400 µs. The pulse frequency during the warm-up phase may typically be increased to 100 - 1000 Hz, and preferably to 100 - 500 Hz. Through experimentation it is found that increasing the pulse duration and pulse frequency up to these values, the food product is heated up quickly while allowing the food product to react to the temperature increase without negatively affecting to the quality of the product. The exact increase in pulse duration and pulse frequency is hereby dependent on the type and characteristics of the food product and if applicable, the optional surrounding medium. At the same time the maximum increase in pulse duration and pulse frequency is bound by the operational limits of the electrical system of the cooking device.

During the warm-up phase the food product is at least heated to a predetermined minimum temperature for the specific food product. The minimum temperature may be sufficient for cooking the specific food product, and as a result there is no need to exceed the minimum temperature. In order to cook the food product to a predetermined degree and to assure that the food product is not underdone, the warm-up phase may be followed by a constant-temperature-phase, in which the pulsed electric field is controlled such that the food product remains its minimum temperature for a predetermined time or until a predetermined amount of energy is transferred to the food product, in order to allow the product to become cooked. Constant temperature in this case means constant withing certain margins, depending for instance but not limited to the accuracy and speed of the controller.

There is no need to overcook the product, so after the predetermined time the pulsed electric field may be stopped. Preferably, during the constant-temperature phase, the pulsed electric field is controlled such that it transfers just the amount of heat needed to cook the product (that is, the energy needed for the chemical process to cook the product to the desired degree), with the amount of energy that is lost to the environment, which could be very low or almost neglectable.

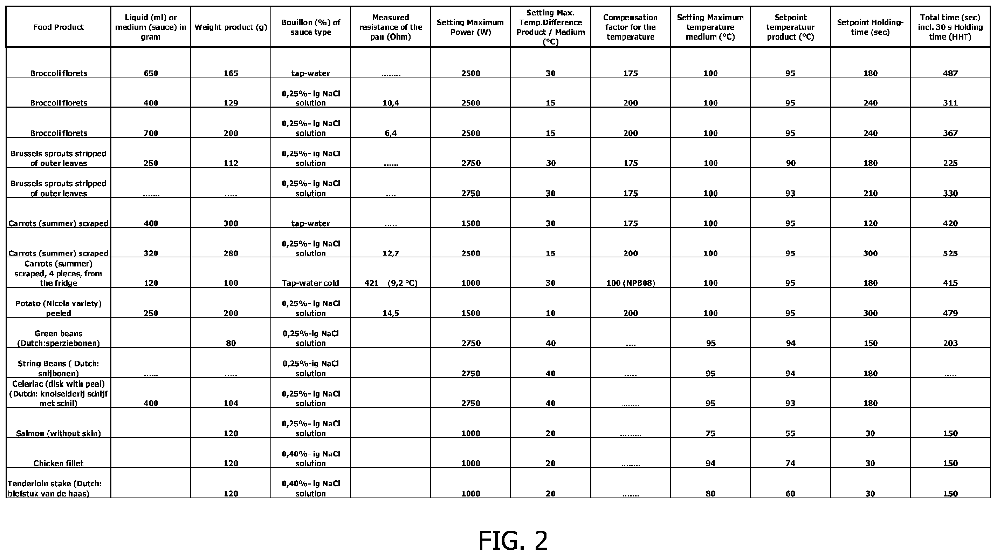

The method according to the invention may comprise a step of providing a minimum temperature and a minimum time or amount of energy for one or more food products, which data may be used to set the pulsed electric field parameters. Figure 2 comprises an example of such table.

Not all process parameters may be measured accurately if the measurement is performed while subjecting the food product to an electric pulse. The functioning of the thermometers for measuring the temperature of the food product and where applicable the surrounding medium is for example affected while placed in a pulsed electric field. It is therefore advantageous if the measurement of at least one process parameter, preferably including the temperature of the food product and/or the surrounding medium, is performed between two consecutive pulses. As a way of controlling and adjusting the cooking process, the pulse profile may be changed after each pulse based on the measured value of at least one of the process parameters. It is however also possible that the pulse profile is changed after multiple consecutive pulses are applied to the at least two electrodes. The process parameters may hereby be measured after each pulse, but may also be measured once every given number of pulses.

The food product may commonly be subjected to a pulsed electric field having a field strength of 10 - 350 V/cm. An advantage associated with the use of such relatively low field strengths compared to those used in the field of pulsed electric fields applied solely for antimicrobial treatment, is that it allows the method according to the invention to be applied in household cooking devices suitable for pulsed electric field cooking without the need for extensive safety precautions.

The exact field strength of the pulsed electric field may normally be set based on the characteristics of the type of food product to be prepared. The field strength of the pulsed electric field may be set to 30 - 130 V/cm, and preferably between 90 - 110 V/cm if the food product is a meat, including seafood, poultry and other meat. If on the other hand the food product is a vegetable, the field strength of the pulsed electric field may be set to 125 - 225 V/cm, and preferably between 165 - 185 V/cm.

In order to further elucidate the invention, exemplary, non-limitative embodiments will be described with reference to the following figures wherein:
- Figure 1 shows a general outline of cooking process involving a method for preparing a food product according to the invention is shown; and
- Figure 2 shows a table with minimum temperatures and duration times for the constant temperature phase for a number of examples of food.

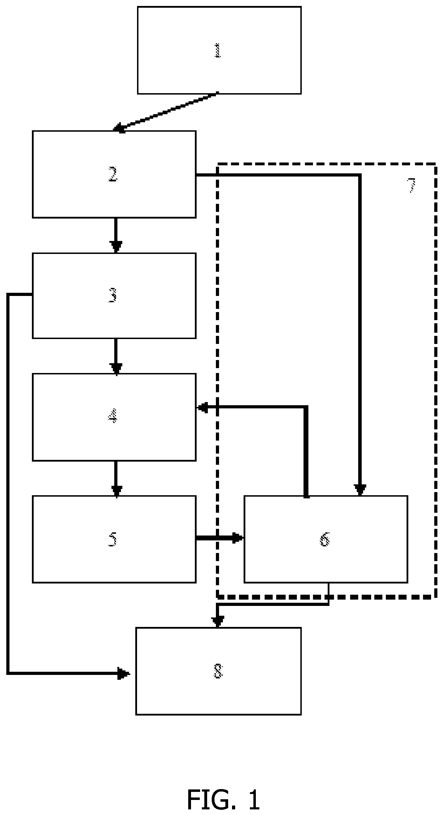

Figure 1 shows a general outline of a cooking process involving a method for preparing a food product according to the invention. The method comprises a preparation phase 1, wherein a food product is placed inside a treatment chamber of a pulsed electric field cooking device. If the food product is a solid food product, the treatment chamber is typically also filled up with a surrounding medium, which is commonly a consumable and conductive liquid, that at least partially but preferably fully surrounds the solid food product. The surrounding medium hereby ensures that the food product is in conductive contact with opposing electrodes of the treatment chamber. After the treatment chamber is loaded, a temperature sensor is placed inside the food product, preferably in such a way that the core temperature of the food product can be measured. In case a surrounding medium is present in the treatment chamber, another temperature sensor is placed inside said surrounding medium. In case the treatment chamber is fitted with a lid, this lid is then closed at the end of the preparation phase 1.

After the preparation phase 1, the predetermined process parameters are set as a following method step 2. The set value of these process parameters is then used as input for the controller 7 that changes the pulse profile based on these values and the values of the process parameters measured during cooking. The process parameters to be predetermined are amongst others the maximum temperature of the food product and, in case a surrounding medium is present in the treatment chamber, the maximum temperature of the surrounding medium. In the latter case the maximum temperature difference between the food product and the surrounding medium is set as well. These temperature values are dependent on the food product to be prepared. As such, a user of the pulsed electric field cooking device typically does not set those values directly, but choses a certain preprogrammed cooking program that includes the setting of these values based on the type of food product. The maximum peak current through the food product and/or the surrounding medium is also set during method step 2. This process parameter may likewise be set through the use of a preprogrammed cooking program. It is however also possible that the maximum peak current is set at a constant value independent from any preprogrammed cooking program or food product type for safety reasons. In addition to the already mentioned process parameters, method step 2 allows the user to set the cooking time, which is generally the time between reaching a certain predetermined maximum temperature of the food product and/or optionally the surrounding medium and the termination of the cooking process. During the cooking time, the temperature of the food product and/or the surrounding medium is thus normally held constant. As the cooking time is related to the type of food product, it is possible that the cooking time is set as part of selecting a preprogrammed cooking program for a certain food product type. However, it is also possible that the cooking time is set directly by the user based on personal preference regarding the result of the cooking process. Finally, the food product type present in the treatment chamber may be manually determined during this step to be used by the controller for controlling the cooking process in dependency of the food product type. The food product type may hereby be selected separately or as part of a preprogrammed cooking program.

Following the setting of the predetermined (maximum) process parameters in step 2 of the method, the initialization phase 3 is started. During the initialization phase 3, a limited number of pulses is applied to the electrodes of the treatment chamber and the peak current is measured. After subjecting the contents of the treatment chamber to said limited number of electric pulses, the cooking process is either terminated when the peak current measured exceeds the predetermined maximum or continued when the peak current measured stays within the predetermined maximum.

If the peak current measured during the initialization phase 3 stays within the predetermined maximum, the main cooking process is commenced in method step 4 wherein the food product, and when applicable the surrounding medium, are subjected to one or more pulses. After subjecting the contents of the treatment chamber to the one or more pulses, at least one of the process parameters, and preferably all of the process parameters are measured during method step 5. The process parameters values resulting from these measurements are then fed to the controller 7. The controller 7 subsequently compares these values with their predetermined maximum values as determined during method step 2. This is followed by the controller acting on the outcome of this comparison by changing or maintaining the current profile of the electric pulses by manipulating the pulse frequency, the pulse duration and the time between two consecutive pulses. This process of manipulating the pulse profile is depicted as method step 6 in the figure. In a first scenario, method step 4 is then repeated wherein the contents of the treatment chamber are again subjected to one or more pulses with the newly determined pulse profile. In a second scenario, the controller 7 then determines that the food product inside the treatment chamber satisfies the conditions for being fully prepared, after which the cooking process is terminated as depicted by method step 8. This decision to terminate the cooking process is based on the comparison of certain predetermined values of the process parameters, including the food product type and the total cooking time, with the history of registered values of the process parameters measured during method step 5. Both the predetermined values of the process parameters as well as the values of the process parameters measured during method step 5 are hereto stored into a memory module accessible by the controller 7.

Figure 2 shows a table comprising minimum temperatures of various food products, to which temperature the food products should be heated during the heat-up phase and duration times for keeping the specific food products at these temperatures during the constant-temperature phase.

## Claims

1. Method for cooking a food product to a predetermined degree, comprising a method for preparing a food product to be suitable for human consumption, said method comprises the steps of:
- placing an amount of food product, optionally in an electrically conductive surrounding medium, in a treatment chamber comprising at least two opposing electrodes such that the food product and/or the surrounding medium is in electrical contact with the electrodes, and
subjecting the food product to a pulsed electric field by applying a sequence of electric pulses generated by a pulsed electric field generator to the at least two electrodes, wherein an electric pulse sequence has a predetermined pulse profile defining, among others, a pulse frequency, a pulse duration and a time between two consecutive pulses,
wherein the method comprises a warm-up phase for electroporation of the food product, comprising:
- setting the field strength of the pulsed electric field based on the characteristics of the type of food product to be prepared; starting at a constant pulse frequency, initially increasing pulse duration;
- increasing the pulse frequency while keeping the pulse duration constant at the last set value;
wherein during the subjection of the food product to the pulsed electric field the following process parameters are monitored:
- the electric potential difference between the opposing electrodes,
- the current through the food product and/or the surrounding medium, - the temperature of the food product and/or the surrounding medium,
wherein the pulse frequency, the pulse duration and the time between two consecutive pulses are changed based on these process parameters, bound by operational limits of the electrical system of the cooking device, wherein the method comprises the step of controlling the maximum increase in pulse duration and pulse frequency such that the field strength of the pulsed electric field does not decrease below the field strength set for the food product and such that the current through the food product and/or the surrounding medium does not exceed a predetermined peak current,
and wherein during the warm-up phase, the food product is at least heated to a predetermined minimum temperature for the specific food product..

2. Method according to claim 1, wherein the pulse duration and/or the pulse frequency are decreased when
A) the temperature of the food product and/or the surrounding medium, and/or
B) the temperature difference between the food product and the surrounding medium, and/or
C) the peak current through the food product and/or the surrounding medium reaches a predetermined value, whichever occurs first.

3. Method according to claim 1 or 2 wherein the pulse duration and/or the pulse frequency are decreased when the field strength of the pulsed electric field decreases below the value set based on the characteristics of the type of food product to be prepared.

4. Method according to claim 2, wherein the predetermined peak current through the food product and/or the surrounding medium, the predetermined temperature of the food product and/or the surrounding medium, are set before subjecting the food product to the pulsed electric field.

5. Method according to any of the preceding claims, comprising providing a minimum temperature and a minimum time or amount of energy for one or more food products, which data may be used to set the pulsed electric field parameters.

6. Method according to claim 5, comprising a constant-temperature-phase following the warm-up phase, in which the pulsed electric field is controlled such that the food product remains its minimum temperature for a predetermined time or until a predetermined amount of energy is transferred to the food product, in order to allow the product to become cooked.

7. Method according to claim 6, wherein, during the constant-temperature phase, the pulsed electric field is controlled such that it transfers just the amount of energy needed to cook the product, in particular the energy needed for the chemical process to cook the product to the desired degree.

8. Method according to any of the preceding claims, comprising a surrounding medium, wherein the predetermined temperature difference between the food product and the surrounding medium lies between 1°C and 40°C.

9. Method according to any of the preceding claims, wherein the sequence of electric pulses comprises an initialization phase, in which initialization phase a limited number of pulses, preferably less than 100 pulses, more preferably 2 to 10 pulses, is applied to the at least two opposing electrodes, and during which initialisation phase the peak current is measured, wherein the electric pulse sequence is terminated when the peak current measured during the initialization phase exceeds a predetermined maximum.

10. Method according to claim 9, wherein the predetermined peak current has a maximum of 1000 A, and preferably lies between 500 A and 600 A.

11. Method according to claim 9 or 10, wherein during the initialization phase the pulse duration is less than 100 µs, preferably less than 50 µs.

12. Method according to any of claims 9-11, wherein during the initialization phase the pulse frequency is less than 200 Hz, preferably less than 100 Hz.

13. Method according to any of the preceding claims, wherein the pulse duration during the warm-up phase is increased to 20 µs to 400 µs.

14. Method according to any of the preceding claims, wherein the pulse frequency during the warm-up phase is increased to 100 Hz to 1000 Hz, preferably to 100 Hz to 500 Hz.

15. Method according to any of the preceding claims, wherein the food product is subjected to a pulsed electric field having a field strength of 10 V/cm to 350 V/cm, in particular wherein the field strength of the pulsed electric field is set to 30 V/cm to 130 V/cm, and preferably between 90 V/cm to 110 V/cm if the food product is a meat, including seafood, poultry and other meat, and/or wherein the field strength of the pulsed electric field is set to 125 V/cm to 225 V/cm, and preferably between 165 V/cm to 185 V/cm if the food product is a vegetable or a potato.

## Patentansprüche

1. Verfahren zum Kochen eines Lebensmittelprodukts bis zu einem gewissen Grad, das ein Verfahren zum Zubereiten eines Lebensmittelprodukts, das für menschlichen Verzehr geeignet ist, umfasst, wobei das Verfahren die folgenden Schritte umfasst:
- Anordnen einer Menge des Lebensmittelprodukts, optional in einem elektrisch leitfähigen umgebenden Medium, in einer Behandlungskammer, die wenigstens zwei gegenüberliegende Elektroden umfasst, so dass das Lebensmittelprodukt und/oder das umgebende Medium mit den Elektroden in elektrischem Kontakt ist, und
- Aussetzen des Lebensmittelprodukts einem gepulsten elektrischen Feld durch Anlegen einer Abfolge von elektrischen Impulsen, die durch einen Generator für ein gepulstes elektrisches Feld erzeugt werden, an die wenigstens zwei Elektroden, wobei eine Abfolge elektrischer Impulse ein zuvor festgelegtes Impulsprofil hat, das unter anderem eine Impulsfrequenz, eine Impulsdauer und eine Zeit zwischen zwei aufeinanderfolgenden Impulsen definiert,
wobei das Verfahren eine Aufwärmphase für eine Elektroporation des Lebensmittelprodukts umfasst, die Folgendes umfasst:
- Einstellen der Feldstärke des gepulsten elektrischen Felds auf der Basis der Eigenschaften des Typs des Lebensmittelprodukts, das zubereitet werden soll; Starten mit einer konstanten Impulsfrequenz, wobei anfänglich die Impulsdauer erhöht wird;
- Erhöhen der Impulsfrequenz, während die Impulsdauer konstant auf dem letzten eingestellten Wert gehalten wird;
wobei während des Aussetzens des Lebensmittelprodukts dem gepulsten elektrischen Feld die folgenden Prozessparameter überwacht werden:
- die Differenz des elektrischen Potenzials zwischen den gegenüberliegenden Elektroden,
- der Strom durch das Lebensmittelprodukt und/oder das umgebende Medium,
- die Temperatur des Lebensmittelprodukts und/oder des umgebenden Mediums,
wobei die Impulsfrequenz, die Impulsdauer und die Zeit zwischen zwei aufeinanderfolgenden Impulsen auf der Basis dieser Prozessparameter geändert werden, wobei diese durch Betriebsgrenzen des elektrischen Systems der Kochvorrichtung abgesteckt sind, wobei das Verfahren den Schritt zum Steuern der maximalen Zunahme der Impulsdauer und Impulsfrequenz umfasst, so dass die Feldstärke des gepulsten elektrischen Felds nicht unter die Feldstärke fällt, die für das Lebensmittelprodukt festgelegt ist, und so, dass der Strom durch das Lebensmittelprodukt und/oder das umgebende Medium nicht einen zuvor festgelegten Maximalstrom überschreitet,
und wobei während der Aufwärmphase das Lebensmittelprodukt wenigstens auf eine zuvor festgelegte Minimaltemperatur für das bestimmte Lebensmittelprodukt erhitzt wird.

2. Verfahren nach Anspruch 1, wobei die Impulsdauer und/oder die Impulsfrequenz verringert werden, wenn:
A) die Temperatur des Lebensmittelprodukts und/oder des umgebenden Mediums, und/oder
B) die Temperaturdifferenz zwischen dem Lebensmittelprodukt und dem umgebenden Medium, und/oder
C) der Maximalstrom durch das Lebensmittelprodukt und/oder das umgebende Medium einen zuvor festgelegten Wert erreicht, unabhängig davon, welcher dieser Werte zuerst eintritt.

3. Verfahren nach Anspruch 1 oder 2, wobei die Impulsdauer und/oder die Impulsfrequenz verringert werden, wenn die Feldstärke des gepulsten elektrischen Felds unter den Wert fällt, der auf der Basis der Eigenschaften des Typs des Lebensmittelprodukts, das zubereitet werden soll, festgelegt ist.

4. Verfahren nach Anspruch 2, wobei der zuvor festgelegte Maximalstrom durch das Lebensmittelprodukt und/oder das umgebende Medium, die zuvor festgelegte Temperatur des Lebensmittelprodukts und/oder des umgebenden Mediums festgelegt werden, bevor das Lebensmittelprodukt dem gepulsten elektrischen Feld ausgesetzt wird.

5. Verfahren nach einem der vorhergehenden Ansprüche, das das Bereitstellen einer Minimaltemperatur und einer minimalen Zeit oder Energiemenge für ein oder mehrere Lebensmittelprodukte umfasst, wobei die Daten verwendet werden, um die Parameter des gepulsten elektrischen Felds festzulegen.

6. Verfahren nach Anspruch 5, das eine Phase mit konstanter Temperatur umfasst, die der Aufwärmphase folgt, während der das gepulste elektrische Feld so gesteuert wird, dass das Lebensmittelprodukt seine Minimaltemperatur für eine zuvor festgelegte Zeit beibehält, oder bis eine zuvor festgelegte Energiemenge an das Lebensmittelprodukt übertragen worden ist, damit das Produkt gekocht werden kann.

7. Verfahren nach Anspruch 6, wobei während der Phase mit konstanter Temperatur das gepulste elektrische Feld so gesteuert wird, dass es genau die Energiemenge überträgt, die zum Kochen des Produkts benötigt wird, insbesondere die Energie, die für den chemischen Prozess zum Kochen des Produkts bis zu dem gewissen Grad benötigt wird.

8. Verfahren nach einem der vorhergehenden Ansprüche, das ein Umgebungsmedium umfasst, wobei die zuvor festgelegte Temperaturdifferenz zwischen dem Lebensmittelprodukt und dem umgebenden Medium zwischen 1°C und 40°C liegt.

9. Verfahren nach einem der vorhergehenden Ansprüche, wobei die Abfolge der elektrischen Impulse eine Initialisierungsphase umfasst, wobei in der Initialisierungsphase eine begrenzte Anzahl an Impulsen, vorzugsweise weniger als 100 Impulse, stärker bevorzugt 2 bis 10 Impulse an die wenigstens zwei gegenüberliegenden Elektroden angelegt werden und wobei während der Initialisierungsphase der Maximalstrom gemessen wird, wobei die Abfolge der elektrischen Impulse beendet wird, wenn der Maximalstrom, der während der Initialisierungsphase gemessen wird, ein zuvor festgelegtes Maximum überschreitet.

10. Verfahren nach Anspruch 9, wobei der zuvor festgelegte Maximalstrom ein Maximum von 1000 A aufweist, und vorzugsweise zwischen 500 A und 600 A liegt.

11. Verfahren nach Anspruch 9 oder 10, wobei während der Initialisierungsphase die Impulsdauer kürzer als 100 µs, vorzugsweise kürzer als 50 µs ist.

12. Verfahren nach einem der Ansprüche 9-11, wobei während der Initialisierungsphase die Impulsfrequenz niedriger als 200 Hz, vorzugsweise niedriger als 100 Hz ist.

13. Verfahren nach einem der vorhergehenden Ansprüche, wobei die Impulsdauer während der Aufwärmphase auf 20 µs bis 400 µs erhöht wird.

14. Verfahren nach einem der vorhergehenden Ansprüche, wobei die Impulsfrequenz während der Aufwärmphase auf 100 Hz bis 1000 Hz, vorzugsweise auf 100 Hz bis 500 Hz erhöht wird.

15. Verfahren nach einem der vorhergehenden Ansprüche, wobei das Lebensmittelprodukt einem gepulsten elektrischen Feld ausgesetzt wird, das eine Feldstärke von 10 V/cm bis 350 V/cm aufweist, wobei insbesondere die Feldstärke des gepulsten elektrischen Felds auf 30 V/cm bis 130 V/cm und vorzugsweise auf zwischen 90 V/cm und 110 V/cm eingestellt wird, wenn das Lebensmittelprodukt Fleisch einschließlich Meeresfrüchten, Geflügel und anderem Fleisch ist, und/oder wobei die Feldstärke des gepulsten elektrischen Felds auf 125 V/cm bis 225 V/cm und vorzugsweise auf zwischen 165 V/cm und 185 V/cm eingestellt wird, falls das Lebensmittelprodukt Gemüse oder Kartoffel ist.

## Revendications

1. Procédé de cuisson d'un produit alimentaire à un degré prédéterminé, comprenant un procédé de préparation d'un produit alimentaire pour qu'il soit propre à la consommation humaine, ledit procédé comprend les étapes :
- de placement d'une quantité de produit alimentaire, éventuellement dans un milieu environnant électriquement conducteur, dans une chambre de traitement comprenant au moins deux électrodes opposées de sorte que le produit alimentaire et/ou le milieu environnant soit/soient en contact électrique avec les électrodes, et
de soumission du produit alimentaire à un champ électrique pulsé en appliquant une séquence d'impulsions électriques générées par un générateur de champ électrique pulsé aux au moins deux électrodes, où une séquence d'impulsions électriques a un profil d'impulsion prédéterminé définissant, entre autres, une fréquence d'impulsion, une durée d'impulsion et un temps entre deux impulsions consécutives,
dans lequel le procédé comprend une phase de préchauffage pour l'électroporation du produit alimentaire, comprenant :
- le réglage de l'intensité de champ du champ électrique pulsé sur la base des caractéristiques du type de produit alimentaire à préparer ; le démarrage à une fréquence d'impulsion constante, en augmentant initialement la durée d'impulsion ;
- l'augmentation de la fréquence d'impulsion tout en maintenant la durée d'impulsion constante à la dernière valeur réglée ;
dans lequel, pendant la soumission du produit alimentaire au champ électrique pulsé, les paramètres de processus suivants sont surveillés :
- la différence de potentiel électrique entre les électrodes opposées,
- le courant à travers le produit alimentaire et/ou le milieu environnant,
- la température du produit alimentaire et/ou du milieu environnant,
dans lequel la fréquence d'impulsion, la durée d'impulsion et le temps entre deux impulsions consécutives sont modifiés sur la base de ces paramètres de processus, dans les limites opérationnelles du système électrique du dispositif de cuisson, dans lequel le procédé comprend l'étape de commande de l'augmentation maximale de la durée d'impulsion et de la fréquence d'impulsion de sorte que l'intensité de champ du champ électrique pulsé ne diminue pas en dessous de l'intensité de champ réglée pour le produit alimentaire et de sorte que le courant à travers le produit alimentaire et/ou le milieu environnant ne dépasse pas un courant de crête prédéterminé,
et dans lequel, pendant la phase de préchauffage, le produit alimentaire est au moins chauffé à une température minimale prédéterminée pour le produit alimentaire spécifique.

2. Procédé selon la revendication 1, dans lequel la durée d'impulsion et/ou la fréquence d'impulsion est/sont diminuée(s) lorsque
A) la température du produit alimentaire et/ou du milieu environnant, et/ou
B) la différence de température entre le produit alimentaire et le milieu environnant, et/ou
C) le courant de crête à travers le produit alimentaire et/ou le milieu environnant
atteint/atteignent une valeur prédéterminée, selon la première éventualité.

3. Procédé selon la revendication 1 ou 2, dans lequel la durée d'impulsion et/ou la fréquence d'impulsion est/sont diminuée(s) lorsque l'intensité de champ du champ électrique pulsé diminue en dessous de la valeur réglée sur la base des caractéristiques du type de produit alimentaire à préparer.

4. Procédé selon la revendication 2, dans lequel le courant de crête prédéterminé à travers le produit alimentaire et/ou le milieu environnant, la température prédéterminée du produit alimentaire et/ou du milieu environnant, sont réglés avant de soumettre le produit alimentaire au champ électrique pulsé.

5. Procédé selon l'une des revendications précédentes, comprenant la fourniture d'une température minimale et d'un temps ou d'une quantité d'énergie minimal(e) pour un ou plusieurs produits alimentaires, ces données peuvent être utilisées pour régler les paramètres de champ électrique pulsé.

6. Procédé selon la revendication 5, comprenant une phase à température constante suivant la phase de préchauffage, dans laquelle le champ électrique pulsé est commandé de sorte que le produit alimentaire reste à sa température minimale pendant un temps prédéterminé ou jusqu'à ce qu'une quantité d'énergie prédéterminée soit transférée au produit alimentaire, afin de permettre la cuisson du produit.

7. Procédé selon la revendication 6, dans lequel, pendant la phase à température constante, le champ électrique pulsé est commandé de sorte qu'il transfère uniquement la quantité d'énergie nécessaire pour cuire le produit, en particulier l'énergie nécessaire au processus chimique pour cuire le produit au degré souhaité.

8. Procédé selon l'une des revendications précédentes, comprenant un milieu environnant, dans lequel la différence de température prédéterminée entre le produit alimentaire et le milieu environnant est comprise entre 1°C et 40°C.

9. Procédé selon l'une des revendications précédentes, dans lequel la séquence d'impulsions électriques comprend une phase d'initialisation, dans cette phase d'initialisation, un nombre limité d'impulsions, de préférence inférieur à 100 impulsions, plus préférablement de 2 à 10 impulsions, est appliqué aux au moins deux électrodes opposées, et pendant cette phase d'initialisation, le courant de crête est mesuré, dans lequel la séquence d'impulsions électriques est terminée lorsque le courant de crête mesuré pendant la phase d'initialisation dépasse un maximum prédéterminé.

10. Procédé selon la revendication 9, dans lequel le courant de crête prédéterminé a un maximum de 1000 A, et se trouve de préférence entre 500 A et 600 A.

11. Procédé selon la revendication 9 ou 10, dans lequel, pendant la phase d'initialisation, la durée d'impulsion est inférieure à 100 µs, de préférence inférieure à 50 µs.

12. Procédé selon l'une des revendications 9 à 11, dans lequel, pendant la phase d'initialisation, la fréquence d'impulsion est inférieure à 200 Hz, de préférence inférieure à 100 Hz.

13. Procédé selon l'une des revendications précédentes, dans lequel la durée d'impulsion pendant la phase de préchauffage est augmentée à une valeur allant de 20 µs à 400 µs.

14. Procédé selon l'une des revendications précédentes, dans lequel la fréquence d'impulsion pendant la phase de préchauffage est augmentée à une valeur allant de 100 Hz à 1000 Hz, de préférence de 100 Hz à 500 Hz.

15. Procédé selon l'une des revendications précédentes, dans lequel le produit alimentaire est soumis à un champ électrique pulsé ayant une intensité de champ de 10 V/cm à 350 V/cm, en particulier dans lequel l'intensité de champ du champ électrique pulsé est réglée entre 30 V/cm et 130 V/cm, et de préférence entre 90 V/cm et 110 V/cm si le produit alimentaire est une viande, y compris les fruits de mer, la volaille et d'autres viandes, et/ou dans lequel l'intensité de champ du champ électrique pulsé est réglée entre 125 V/cm et 225 V/cm, et de préférence entre 165 V/cm et 185 V/cm si le produit alimentaire est un légume ou une pomme de terre.
